# EUROPEAN PATENT SPECIFICATION

(11) **EP 4 151 905 B1**
(45) Date of publication and mention of the grant of the patent: **30.10.2024**
(21) Application number: 21831941.6
(22) Date of filing: 06.04.2021
(51) Int. Cl.: F22B 37/10, F28D 7/16, G21D 1/00, G21F 9/30, F28F 9/013, F28F 9/02

(54) **METHOD FOR DISMANTLING STEAM GENERATOR**
VERFAHREN ZUM ZERLEGEN EINES DAMPFERZEUGERS
PROCÉDÉ DE DÉMONTAGE DE GÉNÉRATEUR DE VAPEUR

(30) Priority: 30.06.2020 JP 2020113281
(43) Date of publication of application: 22.03.2023
(73) Proprietor: Mitsubishi Heavy Industries, Ltd., Tokyo 100-8332 (JP)
(72) Inventor: TADA Kohei, Tokyo 100-8332 (JP); YAMAMOTO Takeshi, Tokyo 100-8332 (JP); HARA Daisuke, Tokyo 100-8332 (JP); KOBAYASHI Yuki, Tokyo 100-8332 (JP); NODA Masaki, Tokyo 100-8332 (JP)
(74) Representative: Cabinet Beau de Loménie
(86) International application number: PCT/JP2021/014631
(87) International publication number: WO 2022/004089

(56) References cited:
- JP-A- 2000 304 890
- JP-A- 2004 069 107
- JP-A- 2008 267 744
- JP-A- 2012 189 247
- JP-A- 2014 130 109
- JP-A- H01 210 229
- JP-A- S5 453 702
- JP-A- S61 213 404
- US-A- 4 905 630
- No further relevant documents disclosed

## Description

### [Technical Field]

The present disclosure relates to a method for dismantling a steam generator.

Priority is claimed on Japanese Patent Application No. 2020-113281, filed June 30, 2020.

### [Background Art]

A steam generator provided in a nuclear power plant or the like includes a plurality of heat transfer tubes. Each heat transfer tube is fixed to a tube plate provided within the steam generator. When dismantling the steam generator, it is necessary to remove the heat transfer tubes from the tube plate. Patent Document 1 discloses a configuration in which a heat transfer tube fixed to a tube plate is pulled out of the tube plate.

### [Citation List]

### [Patent Document]

[Patent Document 1]
Japanese Unexamined Patent Application, First Publication No. 2012-189247

JP 2012 189247 A, JP 2004 069107 A, JP S61 213404 A and JP 2017 130109 A disclose other examples of steam generators for nuclear power plants including a plurality of heat transfer tubes.

### [Summary of Invention]

### [Technical Problem]

Incidentally, the heat transfer tubes are expanded outward in the radial direction in through-holes formed in the tube plate, and are pressed against the inner walls of the through-holes to be fixed. Therefore, it takes time and effort to pull out the heat transfer tubes from the tube plate. Moreover, the inner surface of the heat transfer tube may be contaminated with radioactive substances.

The present invention has been made to solve the above problems, and an object thereof is to provide a method for dismantling a steam generator capable of suppressing the spread of contamination on the inner surface of the heat transfer tubes.

### [Solution to Problem]

In order to solve the above problems, a method for dismantling a steam generator according to the present invention is defined in claim 1, and is a method for dismantling a steam generator including a tube plate, a plurality of heat transfer tubes, and welded portions. The tube plate has a plurality of through-holes. The plurality of heat transfer tubes are each inserted into the through-holes. The plurality of heat transfer tubes are fixed to inner wall surfaces of the through-holes. The welded portion fixes the heat transfer tubes and the tube plate to each other. The method for dismantling a steam generator includes a step of reducing a fixing force of the heat transfer tubes to the tube plate from which the welded portions are removed. The method for dismantling a steam generator includes a step of removing the heat transfer tubes from an inside of the through-holes.

A method for dismantling a steam generator not covered by the present invention is a method for dismantling a steam generator including a tube plate, a plurality of heat transfer tubes, and welded portions. The tube plate has a plurality of through-holes. The plurality of heat transfer tubes are each inserted into the through-holes. The plurality of heat transfer tubes are fixed to inner wall surfaces of the through-holes. The welded portion fixes the heat transfer tubes and the tube plate to each other. The method for dismantling the steam generator includes a step of performing trepanning processing with a diameter equal to or greater than an outer diameter of the heat transfer tube. The method for dismantling a steam generator includes a step of removing the heat transfer tubes from an inside of the through-holes.

### [Advantageous Effects of Invention]

According to the method for dismantling a steam generator of the present invention it is possible to suppress the spread of contamination on the inner surface of the heat transfer tube.

### [Brief Description of Drawings]

FIG. 1 is a cross-sectional view showing a schematic configuration of a steam generator to which a method for dismantling a steam generator according to an embodiment of the present disclosure is applied.
FIG. 2 is a cross-sectional view showing a joint portion between a heat transfer tube and a tube plate in the steam generator according to the embodiment of the present disclosure.
FIG. 3 is a flowchart showing a procedure of the method for dismantling the steam generator according to first to fifth embodiments of the present disclosure.
FIG. 4 is a cross-sectional view showing a step of removing heat transfer tubes in the method for dismantling the steam generator according to the first embodiment of the present disclosure.
FIG. 5 is a cross-sectional view showing a step of reducing a fixing force of the heat transfer tube in the method for dismantling the steam generator according to the second embodiment of the present disclosure.
FIG. 6 is a cross-sectional view showing a step of removing heat transfer tubes in the method for dismantling the steam generator according to the second embodiment of the present disclosure.
FIG. 7 is a cross-sectional view showing a step of reducing a fixing force of the heat transfer tube in the method for dismantling the steam generator according to the third embodiment of the present disclosure.
FIG. 8 is a cross-sectional view showing a step of reducing the fixing force of the heat transfer tube in the method for dismantling the steam generator according to the third embodiment of the present disclosure, and is a cross-sectional view taken along line X-X of FIG. 7.
FIG. 9 is a cross-sectional view showing a step of reducing the fixing force of the heat transfer tube in the method for dismantling the steam generator according to the fourth embodiment of the present disclosure.
FIG. 10 is a cross-sectional view showing a step of removing the heat transfer tube in the method for dismantling the steam generator according to the fourth embodiment of the present disclosure.
FIG. 11 is a flowchart showing a procedure of the method for dismantling the steam generator according to the fifth embodiment of the present disclosure.
FIG. 12 is a cross-sectional view showing a step of performing trepanning processing in the method for dismantling the steam generator according to the fifth embodiment of the present disclosure.
FIG. 13 is a cross-sectional view showing a step of removing the heat transfer tube in the method for dismantling the steam generator according to the fifth embodiment of the present disclosure.

### [Description of Embodiments]

### <First Embodiment>

### (Configuration of Steam Generator)

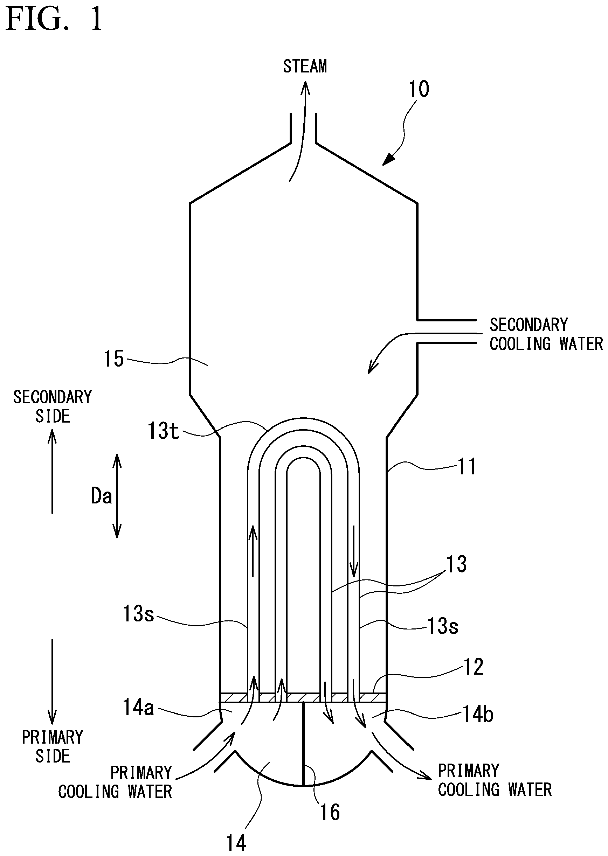

Hereinafter, a method for dismantling a steam generator according to an embodiment of the present disclosure will be described with reference to FIGS. 1 to 13.

As shown in FIG. 1, a steam generator 10 at least includes a body portion 11, a tube plate 12, and a plurality of heat transfer tubes 13. The body portion 11 is a tubular container extending in an axial direction Da. The tube plate 12 is arranged inside the body portion 11. The tube plate 12 is arranged along a plane (for example, a horizontal plane) orthogonal to the axial direction Da. The tube plate 12 partitions the inside of the body portion 11 into upper and lower parts. As a result, in the body portion 11 of the steam generator 10, a primary cooling water chamber 14 below the tube plate 12 and a secondary cooling water chamber 15 above the tube plate 12 are formed. The steam generator 10 illustrated in this embodiment further includes a partition 16. The partition 16 divides the primary cooling water chamber 14 into an inlet side water chamber 14a and an outlet side water chamber 14b. Here, the first side of the tube plate 12 in the axial direction Da (the lower part of the paper in FIG. 1) is the primary side, and the second side of the tube plate 12 in the axial direction Da (the upper part of the paper in FIG. 1) is the secondary side.

The plurality of heat transfer tubes 13 are arranged in the body portion 11. The plurality of heat transfer tubes 13 each have a pair of straight tube portions 13s and a curved portion 13t. The pair of straight tube portions 13s are formed at both end portions of each heat transfer tube 13. Each straight tube portion 13s extends from the primary side to the secondary side. The curved portion 13t is formed in the intermediate portion of each heat transfer tube 13. The curved portion 13t is formed by being curved in an inverted U shape. Both end portions of each heat transfer tube 13 (end portions 13b of each straight tube portion 13s) are fixed to the tube plate 12.

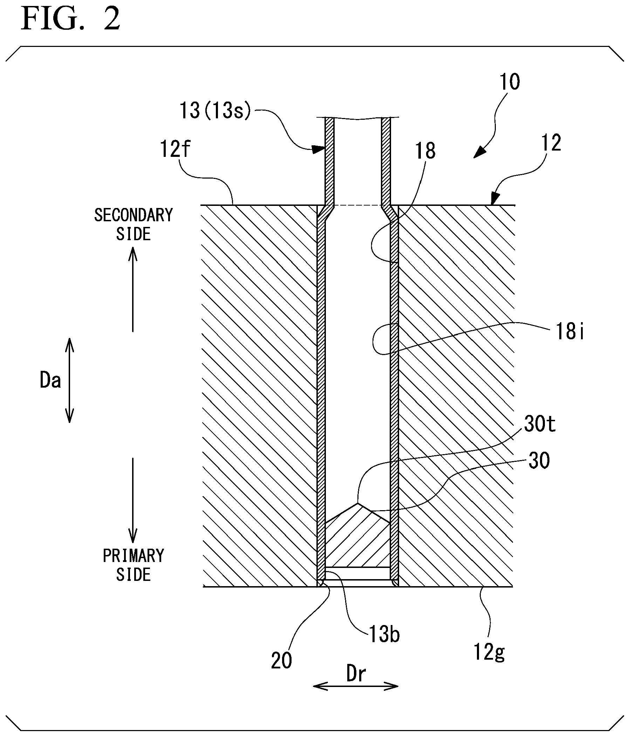

As shown in FIG. 2, a plurality of through-holes 18 penetrating in the axial direction Da are formed in the tube plate 12. Each heat transfer tube 13 (more specifically, the straight tube portion 13s) is inserted into each through-hole 18. In the through-hole 18, the heat transfer tube 13 is expanded toward the outside in a radial direction Dr. As a result, each heat transfer tube 13 is pressed against and fixed to an inner wall surface 18i of the through-hole 18.

The end portions 13b of each heat transfer tube 13 are arranged near a first surface 12g of the tube plate 12 (more specifically, slightly on the secondary side of the first surface 12g). The end portions 13b of each heat transfer tube 13 are bonded to the first surface 12g (and the inner wall surface 18i of the through-hole 18) of the tube plate 12 by seal welding. That is, the steam generator 10 has a welded portion 20 for fixing the end portion 13b of the heat transfer tube 13 and the first surface 12g of the tube plate 12. This steam generator 10 can be provided, for example, in a nuclear power plant.

As shown in FIG. 1, the primary cooling water heated by the nuclear reactor (not shown) is introduced into the inlet side water chamber 14a of the primary cooling water chamber 14 of the steam generator 10. The primary cooling water introduced into the inlet side water chamber 14a passes through the plurality of heat transfer tubes 13 exposed in the secondary cooling water chamber 15 and reaches the outlet side water chamber 14b of the primary cooling water chamber 14.

Secondary cooling water is introduced into the secondary cooling water chamber 15. The secondary cooling water is heated into steam by exchanging heat with the primary cooling water passing through the heat transfer tube 13 in the secondary cooling water chamber 15. The steam generated in the secondary cooling water chamber 15 is sent to a turbine (not shown) installed outside the steam generator 10. Further, the primary cooling water cooled by heat exchange with the secondary cooling water is sent to a nuclear reactor (not shown).

### (Method for Dismantling Steam Generator)

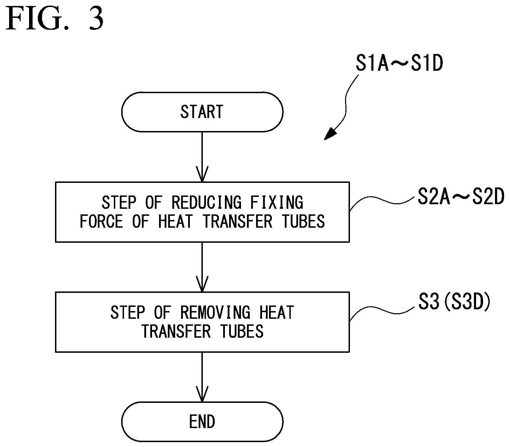

As shown in FIG. 3, a method S1A for dismantling the steam generator 10 includes a step S2A of reducing the fixing force of the heat transfer tubes 13 and a step S3 of removing the heat transfer tubes 13.

In the step S2A of reducing the fixing force of the heat transfer tubes 13, the fixing force of the heat transfer tubes 13 expanded in the through-holes 18 of the tube plate 12, from which the welded portion 20 is removed, with respect to the tube plate 12 is reduced. In this embodiment, for example, by heating the heat transfer tubes 13 to cause deformation in the heat transfer tubes 13, the fixing force of the heat transfer tubes 13 to the tube plate 12 is reduced. Specifically, for example, the heat transfer tubes 13 are heated by a welding arc for tungsten inert gas (TIG) welding or a laser for laser beam welding. Then, the heat transfer tube 13 is heated. This heating causes the heat transfer tubes 13 to deform (for example, contraction of the heat transfer tubes 13 in the radial direction). Then, the fixing force of the heat transfer tubes 13 to the tube plate 12 is reduced. As means for heating the heat transfer tube 13, for example, a burner, an electric heater, and the like may be used in addition to the welding arc and the laser. In a case where the end portions of the heat transfer tube 13 are sealed with a plug 30 inserted into the heat transfer tube 13, the welded portions 20 including the plug 30 are removed.

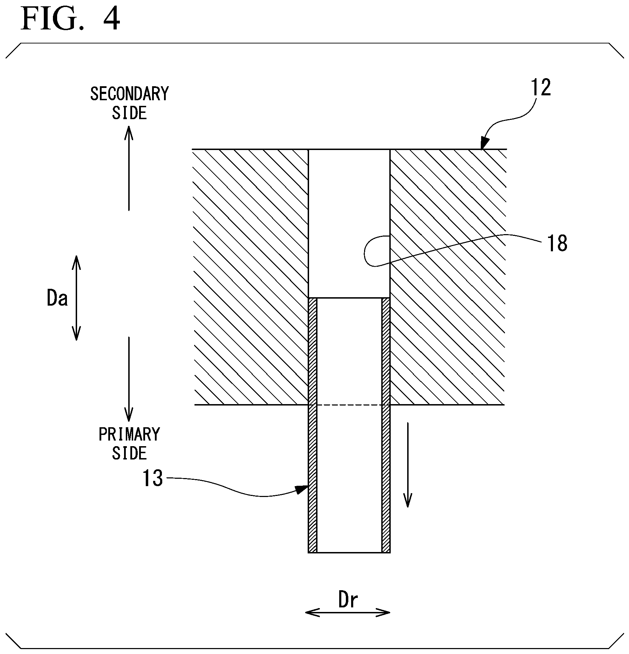

In the step S3 of removing the heat transfer tubes 13, as shown in FIG. 4, the heat transfer tubes 13 of which the fixing force to the tube plate 12 has decreased in the step S2A of reducing the fixing force of the heat transfer tubes 13 are removed from the through-holes 18. In this embodiment, the heat transfer tubes 13 are removed from the tube plate 12 by pulling out the heat transfer tubes 13 from the lower side of the tube plate 12 toward the primary side in the axial direction Da.

By performing such work on the plurality of heat transfer tubes 13, the plurality of heat transfer tubes 13 are removed from the tube plate 12.

### (Effects)

In the method S1A for dismantling the steam generator 10 of the above embodiment includes the step S2A of reducing the fixing force of the heat transfer tubes 13 to the tube plate 12, and the step S3 of removing the heat transfer tubes 13 from the through-holes 18.

Therefore, according to the method S1A for dismantling the steam generator 10 of the embodiment, the heat transfer tubes 13 can be removed from the through-holes 18 after the fixing force of the heat transfer tubes 13 to the tube plate 12 is reduced. As a result, it is possible to suppress the spread of contamination on the inner surface of the heat transfer tube 13. In addition, the heat transfer tubes 13 can be easily removed from the tube plate 12.

In the above embodiment, in the step S2A of reducing the fixing force, the heat transfer tubes 13 are heated to deform the heat transfer tubes 13, and the fixing force of the heat transfer tubes 13 to the tube plate 12 can be easily reduced.

In the above embodiment, in case where the end portions 13b of the heat transfer tube 13 are sealed with the plug 30, the welded portion 20 is removed including the plug 30. Accordingly, it becomes possible to efficiently remove the heat transfer tubes 13 and the plug 30 from the tube plate 12.

### <Second Embodiment>

Next, a second embodiment of the method for dismantling a steam generator according to this disclosure will be described. In the second embodiment described below, only the configuration of a step S2B for reducing the fixing force differs from that of the first embodiment, and thus the same parts as those in the first embodiment will be given the same reference numerals, and redundant description will be omitted.

### (Method for Dismantling Steam Generator)

As shown in FIG. 3, a method S1B for dismantling the steam generator 10 includes a step S2B of reducing the fixing force of the heat transfer tubes 13 and the step S3 of removing the heat transfer tubes 13.

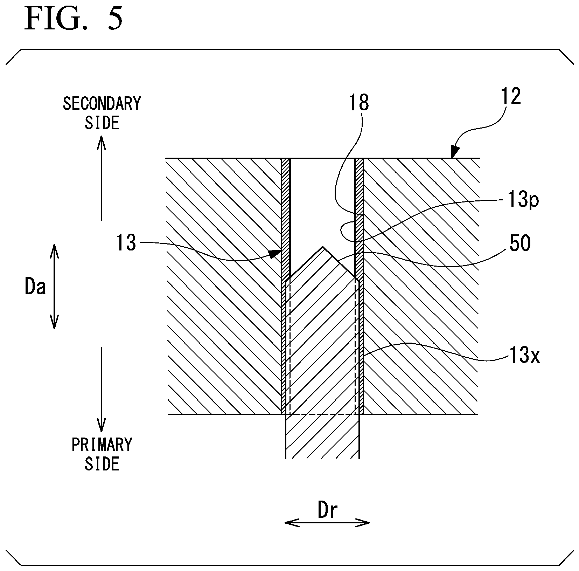

In this embodiment, in the step S2B of reducing the fixing force of the heat transfer tubes 13, the thickness of the heat transfer tubes 13 in the radial direction Dr is reduced. For this purpose, for example, as shown in FIG. 5, an inner peripheral surface 13p of the heat transfer tube 13 is cut from the primary side of the heat transfer tube 13 with a drill 50 inside the through-hole 18 in the radial direction Dr. At this time, the outer diameter of the drill 50 to be used is set to be greater than the inner diameter of the heat transfer tube 13 and smaller than the outer diameter of the heat transfer tube 13. As a result, the inner part of the heat transfer tube 13 in the radial direction Dr including the inner peripheral surface 13p is removed from the heat transfer tube 13, leaving only the outer part 13x in the radial direction Dr.

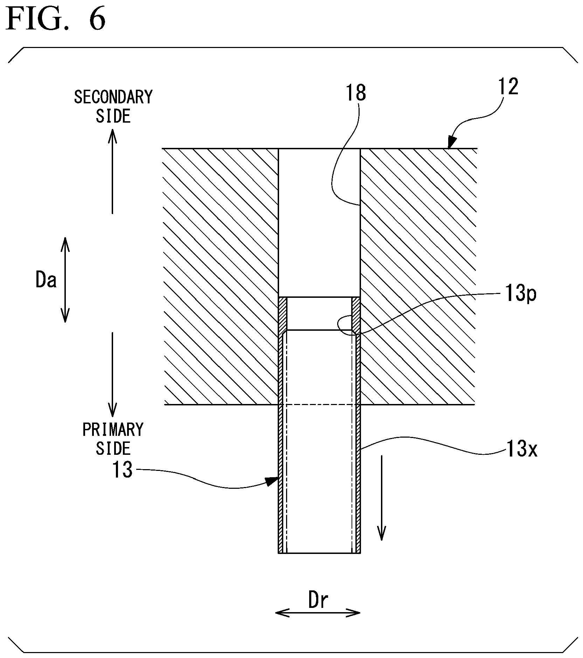

In the step S3 of removing the heat transfer tubes 13, the heat transfer tubes 13 having the cut inner peripheral surfaces 13p are removed from the through-holes 18, as shown in FIG. 6. In this second embodiment, similarly to the first embodiment, the heat transfer tubes 13 are removed from the tube plate 12 by pulling out the heat transfer tubes 13 from the primary side of the tube plate 12.

By cutting the inner peripheral surface 13p of the heat transfer tube 13 in this manner, the rigidity of the heat transfer tube 13 decreases in the through-hole 18 of the tube plate 12. Thereby, the fixing force of the heat transfer tube 13 to the tube plate 12 is reduced. The inner peripheral surface 13p of the heat transfer tube 13 is contaminated with radioactive substances contained in the primary cooling water. However, by removing the part including the inner peripheral surface 13p of the heat transfer tube 13, the expansion of the contamination to the tube plate 12 can be suppressed.

The cutting of the inner peripheral surface 13p of the heat transfer tube 13 by the drill 50 may be performed over the entire length in the axial direction Da fixed to the through-hole 18 of the tube plate 12, or may be performed only partially in the axial direction Da. For example, cutting of the inner peripheral surface 13p of the heat transfer tube 13 by the drill 50 may proceed in the axial direction Da, and cutting may be stopped when the heat transfer tube 13 rotates together with the drill 50. Here, the reason why the heat transfer tube 13 rotates together with the drill 50 is that the fixing force of the heat transfer tube 13 to the through-hole 18 has decreased.

### (Effects)

In the method S1B for dismantling the steam generator 10 of the second embodiment, the heat transfer tubes 13 can be removed from the through-holes 18 after the fixing force of the heat transfer tubes 13 to the tube plate 12 is reduced. As a result, it is possible to suppress the spread of contamination on the inner surface of the heat transfer tube 13. In addition, the heat transfer tubes 13 can be easily removed from the tube plate 12.

In the above embodiment, in the step S2B of reducing the fixing force, the inner peripheral surface 13p of the heat transfer tube 13 is cut inside the through-hole 18 in the radial direction Dr to reduce the thickness of the heat transfer tube 13 in the radial direction Dr. As a result, the rigidity of the heat transfer tubes 13 within the through-holes 18 of the tube plate 12 is reduced. Therefore, the fixing force of the heat transfer tubes 13 to the tube plate 12 can be easily reduced.

### <Third Embodiment>

Next, a third embodiment of the method for dismantling a steam generator according to this disclosure will be described. In the third embodiment described below, only the configuration of a step S2C for reducing the fixing force differs from that of the first embodiment, and thus the same parts as those in the first embodiment will be given the same reference numerals, and redundant description will be omitted.

### (Method for Dismantling Steam Generator)

As shown in FIG. 3, a method S1C for dismantling the steam generator 10 includes the step S2C of reducing the fixing force of the heat transfer tubes 13 and the step S3 of removing the heat transfer tubes 13.

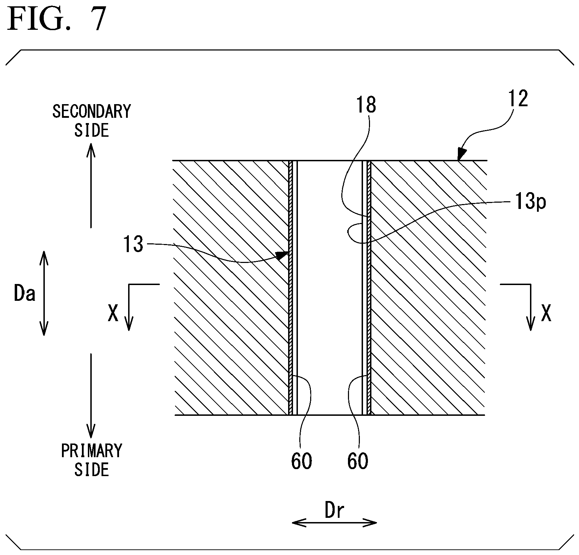

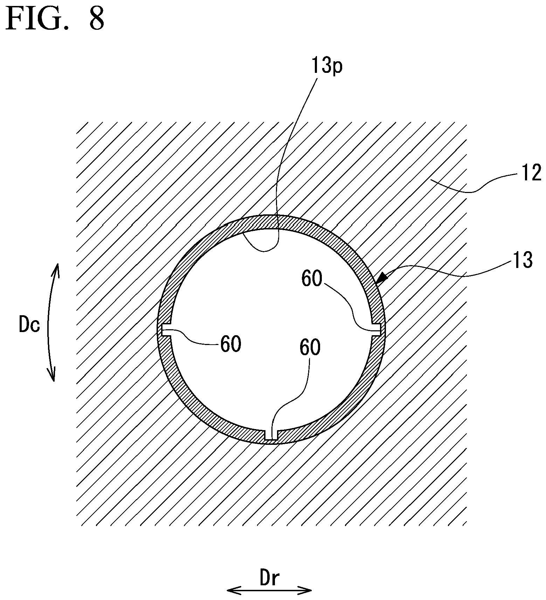

In this embodiment, in the step S2C of reducing the fixing force of the heat transfer tubes 13, the thickness of the heat transfer tubes 13 in the radial direction Dr is reduced at part of the heat transfer tubes 13 in the circumferential direction Dc. For this purpose, for example, as shown in FIGS. 7 and 8, inside the through-hole 18 in the radial direction Dr, on the inner peripheral surface 13p of the heat transfer tube 13, one or more grooves 60, which are continuously connected to the heat transfer tube 13 in the extending direction (axial direction Da), are formed. In this embodiment, for example, three grooves 60 are formed at intervals in the circumferential direction Dc. The number of grooves 60 is not limited to three, and may be another number. Here, the grooves 60 may be formed over the entire length in the axial direction Da of the heat transfer tubes 13 fixed to the through-holes 18 of the tube plate 12, or may be formed only partially in the axial direction Da.

By forming the grooves 60 on the inner peripheral surface 13p of the heat transfer tube 13 in this manner, the rigidity of the heat transfer tube 13 decreases in the through-hole 18 of the tube plate 12. Thereby, the fixing force of the heat transfer tube 13 to the tube plate 12 is reduced.

In the step S3 of removing the heat transfer tubes 13, similarly to the first and second embodiments, the heat transfer tubes 13 having the grooves 60 are removed from the through-holes 18.

### (Effects)

In the method S1C for dismantling the steam generator 10 of the third embodiment, similarly to the first and second embodiments, the heat transfer tubes 13 can be removed from the through-holes 18 after the fixing force of the heat transfer tubes 13 to the tube plate 12 is reduced. As a result, it is possible to suppress the spread of contamination on the inner surface of the heat transfer tube 13. In addition, the heat transfer tubes 13 can be easily removed from the tube plate 12.

In the third embodiment, in the step S2C of reducing the fixing force, the grooves 60 are formed on the inner peripheral surface 13p of the heat transfer tube 13 inside the through-hole 18 in the radial direction Dr, and the thickness of the heat transfer tube 13 in the radial direction Dr is reduced at part of the heat transfer tube 13 in the circumferential direction Dc. Thereby, the fixing force of the heat transfer tubes 13 to the tube plate 12 can be reduced.

### <Fourth Embodiment>

Next, a fourth embodiment of the method for dismantling a steam generator according to this disclosure will be described. In the fourth embodiment described below, only the configuration of the step of removing the heat transfer tube 13 differs from that of the first embodiment, and thus the same parts as those in the first embodiment will be given the same reference numerals, and redundant description will be omitted.

### (Method for Dismantling Steam Generator)

As shown in FIG. 3, a method S1D for dismantling the steam generator 10 includes a step S2D of reducing the fixing force of the heat transfer tubes 13 and a step S3D of removing the heat transfer tubes 13.

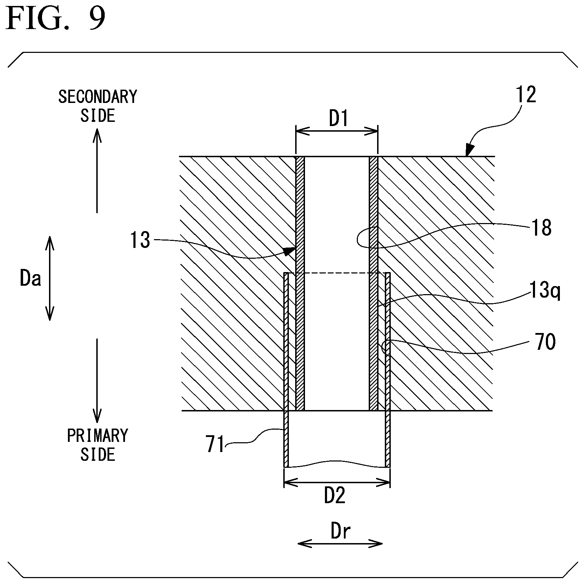

In the fourth embodiment, in the step S2D of reducing the fixing force of the heat transfer tubes 13, any one of the steps S2A to S2C of reducing the fixing force of the heat transfer tubes 13 in the first to third embodiments described above is performed. In the fourth embodiment, in the step S3D of removing the heat transfer tube 13, as shown in FIG. 9, the trepanning processing is performed with a diameter D2 equal to or greater than the outer diameter D1 of the heat transfer tube 13. For this, for example, a cylindrical hole 70 is formed in the tube plate 12 outside the outer peripheral surface 13q of the heat transfer tube 13 in the radial direction Dr by using a cutting tool 71 having a diameter greater than the outer diameter D1.

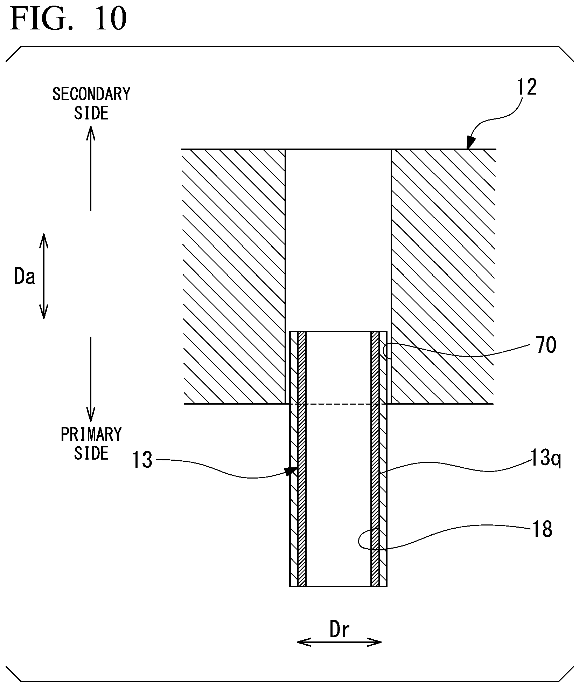

By forming the cylindrical holes 70 by such trepanning processing, the heat transfer tubes 13 are separated from the tube plate 12. Thereby, as shown in FIG. 10, the heat transfer tubes 13 separated from the tube plate 12 can be removed from the tube plate 12.

### (Effects)

In the method S1D for dismantling the steam generator 10 of the fourth embodiment, the trepanning processing is performed with the diameter D2 equal to or greater than the outer diameter D1 of the heat transfer tube 13. As a result, the heat transfer tubes 13 are separated from the tube plate 12, and the fixing force of the heat transfer tubes 13 to the tube plate 12 is reduced. Therefore, the heat transfer tubes 13 can be easily removed from the tube plate 12.

Further, in the fourth embodiment, the heat transfer tubes 13 are removed from the tube plate 12 after the fixing force of the heat transfer tubes 13 is reduced. As a result, it is possible to suppress the spread of contamination on the inner surface of the heat transfer tube 13. In addition, the trepanning processing can be stably performed at a position near the inner surface of the through-hole 18.

### <Fifth Embodiment>

Next, a fifth embodiment of the method for dismantling a steam generator according to this disclosure will be described. In the fifth embodiment described below, the same reference numerals will be given to the same parts as those of the first to fourth embodiments, and redundant description thereof will be omitted.

### (Method for Dismantling Steam Generator)

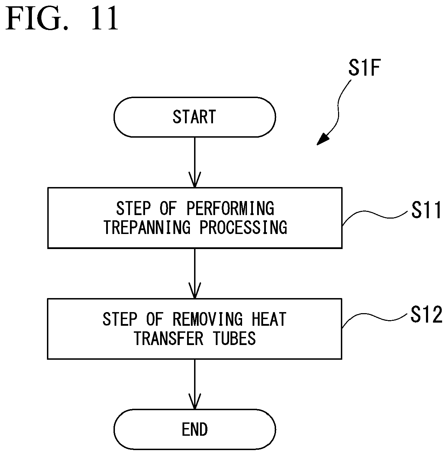

As shown in FIG. 11, a method S1F for dismantling the steam generator 10 includes a step S11 of performing trepanning processing and a step S12 of removing the heat transfer tubes 13.

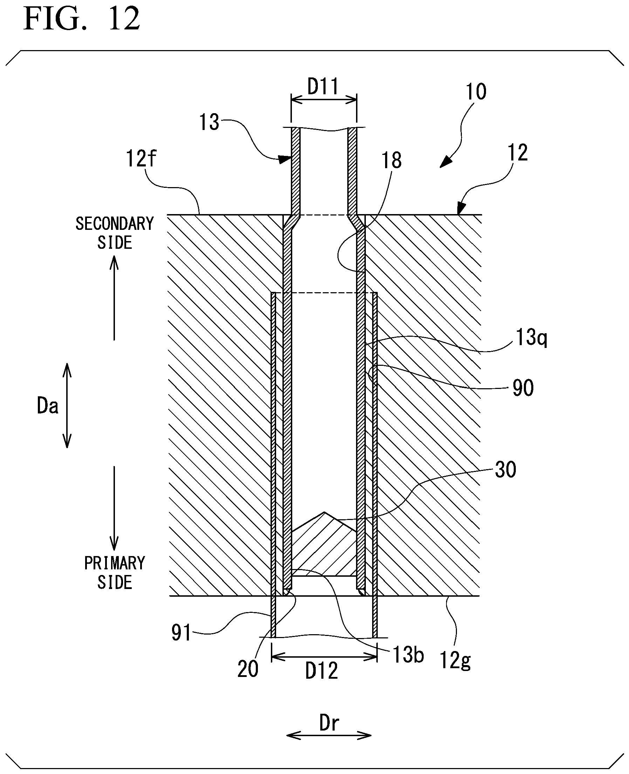

In this embodiment, in the step S11 of performing the trepanning processing, as shown in FIG. 12, the trepanning processing is performed with a diameter D12 equal to or greater than an outer diameter D11 of the heat transfer tube 13. For this, for example, a cylindrical hole 90 is formed in the tube plate 12 outside the outer peripheral surface 13q of the heat transfer tube 13 in the radial direction Dr by using a cutting tool 91 having the diameter D12 greater than the outer diameter D11. The cylindrical hole 90 is formed to penetrate from the first surface 12g to a second surface 12f of the tube plate 12. By forming the cylindrical holes 90 by such trepanning processing, the heat transfer tubes 13 are separated from the tube plate 12.

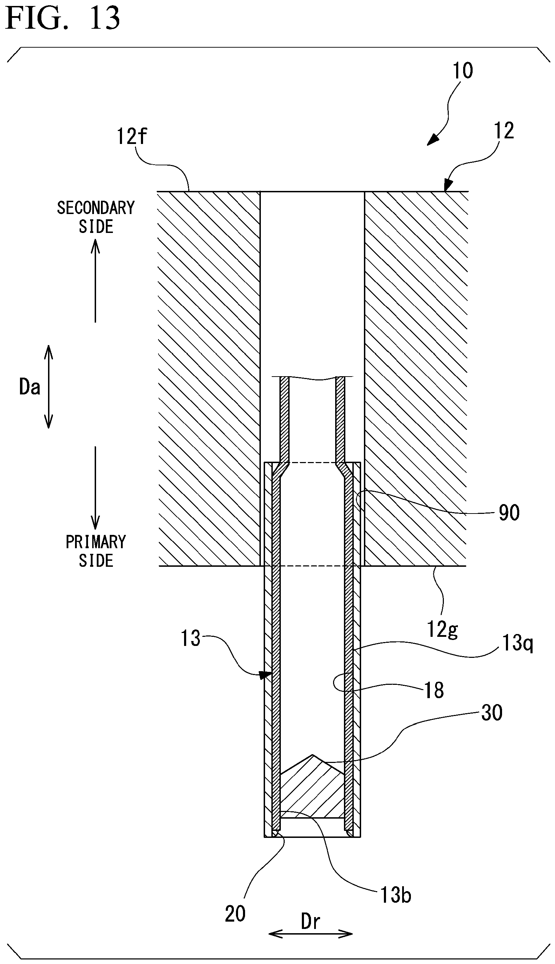

In the step S12 of removing the heat transfer tubes 13, as shown in FIG. 13, the heat transfer tubes 13 separated from the tube plate 12 are removed from the through-holes 18. In this case, the heat transfer tubes 13 may be pulled out of the lower side of the tube plate 12 toward the primary side in the axial direction Da as in the first to fourth embodiments, or may be pulled out of the upper side of the tube plate 12 toward the secondary side in the axial direction Da.

### (Effects)

In the method S1F for dismantling the steam generator 10 of the fifth embodiment, the heat transfer tubes 13 are separated from the tube plate 12 by forming cylindrical holes 90 by the trepanning processing. Therefore, it is possible to suppress the spread of contamination on the inner surface of the heat transfer tube 13. In addition, the heat transfer tubes 13 can be easily removed from the tube plate 12.

In addition, when removing the heat transfer tubes 13, it is not necessary to remove the welded portions 20, the plug 30, and the like, in advance, and in this regard, the heat transfer tubes 13 can also be easily removed from the tube plate 12.

### (Other Embodiments)

Above, the embodiments of the present disclosure have been described in detail with reference to the drawings, but the specific configuration is not limited to the embodiments, and includes design changes and the like within the scope of the present disclosure.

For example, in the above fourth and fifth embodiments, the cylindrical holes 70 and 90 are formed in the tube plate 12 outside the outer peripheral surface 13q of the heat transfer tube 13 in the radial direction Dr by using the cutting tools 71 and 91 having the diameters D2 and D12 greater than the outer diameters D1 and D11, but the present disclosure is not limited thereto. The trepanning processing may be performed with the diameters D2 and D12 that are equal to or greater than the outer diameters D1 and D11 of the heat transfer tubes 13. That is, the trepanning processing may be performed with the same diameters as the outer diameters D1 and D11 of the heat transfer tubes 13 to form the holes 70 and 90 along the boundary surfaces between the heat transfer tubes 13 and the through-holes 18.

Further, the sequence of the procedure of the above method for dismantling the steam generator may be changed as appropriate.

### <Additional Remarks>

The method for dismantling the steam generator described in each embodiment is ascertained as follows, for example.

There are provided the methods S1A to S1F for dismantling the steam generator 10 including the tube plate 12 having the plurality of through-holes 18, the plurality of heat transfer tubes 13 each inserted into the through-holes 18, and fixed to the inner wall surfaces 18i of the through-holes 18, and the welded portions 20 fixing the heat transfer tubes 13 and the tube plate 12 to each other, the methods S1A to S1F including: the steps S2A to S4D of reducing the fixing force of the heat transfer tubes 13 to the tube plate 12 from which the welded portions 20 are removed; and the step S3 of removing the heat transfer tubes 13 from the inside of the through-holes 18.

In the methods S1A to S1F for dismantling the steam generator 10, the heat transfer tubes 13 can be removed from the inside of the through-holes 18 after the fixing force of the heat transfer tubes 13 to the tube plate 12 is reduced. Therefore, it is possible to suppress the spread of contamination on the inner surface of the heat transfer tube 13. In addition, the heat transfer tubes 13 can be easily removed from the tube plate 12.

In the step S2A of reducing the fixing force of the heat transfer tubes 13, the fixing force of the heat transfer tubes 13 to the tube plate 12 may be reduced by heating the heat transfer tubes 13 to deform the heat transfer tubes 13.

By heating and deforming the heat transfer tubes 13 in this manner, the fixing force of the heat transfer tubes 13 to the tube plate 12 can be easily reduced.

In the step S2B of reducing the fixing force of the heat transfer tubes 13, the fixing force of the heat transfer tubes 13 to the tube plate 12 may be reduced by cutting the inner peripheral surface 13p of the heat transfer tube 13 inside the through-hole 18 in the radial direction Dr and reducing the thickness of the heat transfer tube 13 in the radial direction Dr.

By reducing the thickness of the heat transfer tube 13 in the radial direction Dr in this manner, the rigidity of the heat transfer tube 13 decreases in the through-hole 18 of the tube plate 12. Accordingly, it becomes easier for the heat transfer tubes 13 to deform when a force is applied to the heat transfer tubes 13. Therefore, the fixing force of the heat transfer tubes 13 to the tube plate 12 can be easily reduced.

In the step S2C of reducing the fixing force of the heat transfer tubes 13, the fixing force of the heat transfer tubes 13 to the tube plate 12 may be reduced by forming the continuous grooves 60 in the extending direction of the heat transfer tube 13, and reducing the thickness of the heat transfer tube 13 in the radial direction Dr at part of the heat transfer tube 13 in the circumferential direction Dc.

By forming the grooves 60 on the inner peripheral surface 13p of the heat transfer tube 13 in this manner, the rigidity of the heat transfer tube 13 decreases in the through-hole 18 of the tube plate 12. Thereby, the fixing force of the heat transfer tube 13 to the tube plate 12 is reduced.

A step of performing trepanning processing with the diameter D2 equal to or greater than the outer diameter D1 of the heat transfer tube 13 after the step S2D of reducing the fixing force of the heat transfer tubes 13, may be further provided.

In this manner, the heat transfer tubes 13 are separated from the tube plate 12 by performing the trepanning processing with the diameter D2 equal to or greater than the outer diameter D1 of the heat transfer tube 13. Accordingly, it becomes possible to easily remove the heat transfer tubes 13 from the tube plate 12 after the fixing force of the heat transfer tubes 13 to the tube plate 12 is reduced.

In a case where the end portions 13b of the heat transfer tube 13 are sealed by the plug 30 inserted into the heat transfer tube 13, the welded portion 20 is removed including the plug 30.

By removing the plug 30 in the heat transfer tubes 13 together with the welded portions 20 in this manner, the heat transfer tubes 13 can be easily removed from the tube plate 12.

There may be provided the method S1F for dismantling the steam generator 10 including the tube plate 12 having the plurality of through-holes 18, the plurality of heat transfer tubes 13 each inserted into the through-holes 18, and fixed to the inner wall surfaces 18i of the through-holes 18, and the welded portions 20 fixing the heat transfer tubes 13 and the tube plate 12 to each other, the method including: the step S11 of performing trepanning processing with the diameter D12 equal to or greater than the outer diameter D11 of the heat transfer tube 13; and the step S12 of removing the heat transfer tubes 13 from the inside of the through-holes 18.

Accordingly, by forming the cylindrical holes 90 by such trepanning processing, the heat transfer tubes 13 are separated from the tube plate 12. Therefore, it is possible to suppress the spread of contamination on the inner surface of the heat transfer tube 13. In addition, the heat transfer tubes 13 can be easily removed from the tube plate 12.

### [Industrial Applicability]

According to the method for dismantling a steam generator of the present disclosure, it is possible to suppress the spread of contamination on the inner surface of the heat transfer tube.

### [Reference Signs List]

10: Steam generator
11: Body portion
12: Tube plate
12f: Second surface
12g: First surface
13: Heat transfer tube
13b: End portion
13p: Inner peripheral surface
13q: Outer peripheral surface
13s: Straight tube portion
13t: Curved portion
13x: Part
14: Primary cooling water chamber
14a: Inlet side water chamber
14b: Outlet side water chamber
15: Secondary cooling water chamber
16: Partition
18: Through-hole
18i: Inner wall surface
20: Welded portion
30: Plug
50: Drill
60: Groove
70: Hole
71: Cutting tool
90: Hole
91: Cutting tool
D1, D11: Outer diameter
D2, D12: Diameter
Da: Axial direction
Dc: Circumferential direction
Dr: Radial direction
S1A, S1B, S1C, S1D, S1F: Method of dismantling steam generator
S2A to S2D: Steps for reducing fixing force of heat transfer tubes
S3, S3D: Steps of removing heat transfer tubes
S11: Step of performing trepanning processing
S12: Step of removing heat transfer tubes

## Claims

1. A method (S1A-S1D) for dismantling a steam generator (10) including a tube plate (12) having a plurality of through-holes (18), a plurality of heat transfer tubes (13) each inserted into the through-holes (18), and fixed to inner wall surfaces (18i) of the through-holes, a plurality of plugs (30) inserted into each of the plurality of heat transfer tubes (13), and welded portions (20) fixing end portions (13b) of the heat transfer tubes (13) and the tube plate (12) to each other, the method comprising:
a step (S2A-S2D) of reducing a fixing force of the heat transfer tubes (13) to the tube plate (12) from which the welded portions (20) are removed; and
a step (S3, S3D) of removing the heat transfer tubes (13) from an inside of the through-holes (18),
**characterized in that**
in a case where the end portions (13b) of the heat transfer tube (13) are sealed by the plurality of plugs (30) inserted into the heat transfer tubes (13), the welded portions (20) are removed including the plugs (30).

2. The method (S1A) for dismantling a steam generator (10) according to Claim 1, wherein
in the step (S2A) of reducing the fixing force of the heat transfer tubes (13), the fixing force of the heat transfer tubes (13) to the tube plate (12) is reduced by heating the heat transfer tubes (13) to deform the heat transfer tubes (13).

3. The method (S1B) for dismantling a steam generator (10) according to Claim 1, wherein
in the step (S2B) of reducing the fixing force of the heat transfer tubes (13), the fixing force of the heat transfer tubes (13) to the tube plate (12) is reduced by cutting an inner peripheral surface (13p) of the heat transfer tube (13) inside the through-hole (18) in a radial direction (Dr) and reducing a thickness of the heat transfer tube (13) in the radial direction (Dr).

4. The method (S1C) for dismantling a steam generator (10) according to Claim 1, wherein
in the step (S2C) of reducing the fixing force of the heat transfer tubes (13), the fixing force of the heat transfer tubes (13) to the tube plate (12) is reduced by forming continuous grooves (60) in an extending direction of the heat transfer tube (13) on an inner peripheral surface (13p) of the heat transfer tube (13) inside the through-hole (18) in a radial direction (Dr), and reducing a thickness of the heat transfer tube (13) in the radial direction (Dr) at part of the heat transfer tube (13) in a circumferential direction (Dc).

5. The method (S1D) for dismantling a steam generator (10) according to any one of Claims 1 to 4, further comprising:
a step of performing trepanning processing with a diameter (D2) equal to or greater than an outer diameter (D1) of the heat transfer tube (13) after the step (S2D) of reducing the fixing force of the heat transfer tubes (13).

## Patentansprüche

1. Verfahren (S1A-S1D) zum Zerlegen eines Dampferzeugers (10), der eine Rohrplatte (12), die eine Vielzahl von Durchgangslöchern (18) aufweist, eine Vielzahl von Wärmeübertragungsrohren (13), die jeweils in die Durchgangslöcher (18) eingesetzt und an Innenwandflächen (18i) der Durchgangslöcher befestigt sind, und eine Vielzahl von Stopfen (30), die in jedes der Vielzahl von Wärmeübertragungsrohren (13) eingesetzt sind, und geschweißte Abschnitte (20), die Endabschnitte (13b) der Wärmeübertragungsrohre (13) und der Rohrplatte (12) aneinander befestigen, beinhaltet, das Verfahren umfassend:
einen Schritt (S2A-S2D) eines Reduzierens einer Befestigungskraft der Wärmeübertragungsrohre (13) an der Rohrplatte (12), wovon die geschweißten Abschnitte (20) entfernt werden; und
einen Schritt (S3, S3D) eines Entfernens der Wärmeübertragungsrohre (13) von einer Innenseite der Durchgangslöcher (18),
**dadurch gekennzeichnet, dass**
in einem Fall, in dem die Endabschnitte (13b) des Wärmeübertragungsrohrs (13) durch die Vielzahl von Stopfen (30), die in die Wärmeübertragungsrohre (13) eingesetzt sind, abgedichtet sind, die geschweißten Abschnitte (20) einschließlich der Stopfen (30) entfernt werden.

2. Verfahren (S1A) zum Zerlegen eines Dampferzeugers (10) nach Anspruch 1, wobei
in dem Schritt (S2A) eines Reduzierens der Befestigungskraft der Wärmeübertragungsrohre (13) die Befestigungskraft der Wärmeübertragungsrohre (13) an der Rohrplatte (12) durch Erhitzen der Wärmeübertragungsrohre (13), um die Wärmeübertragungsrohre (13) zu verformen, reduziert wird.

3. Verfahren (S1B) zum Zerlegen eines Dampferzeugers (10) nach Anspruch 1, wobei
in dem Schritt (S2B) eines Reduzierens der Befestigungskraft der Wärmeübertragungsrohre (13) die Befestigungskraft der Wärmeübertragungsrohre (13) an der Rohrplatte (12) durch Schneiden einer inneren Umfangsfläche (13p) des Wärmeübertragungsrohrs (13) innerhalb des Durchgangslochs (18) in einer radialen Richtung (Dr) und Reduzieren einer Stärke des Wärmeübertragungsrohrs (13) in der radialen Richtung (Dr) reduziert wird.

4. Verfahren (S1C) zum Zerlegen eines Dampferzeugers (10) nach Anspruch 1, wobei
in dem Schritt (S2C) eines Reduzierens der Befestigungskraft der Wärmeübertragungsrohre (13) die Befestigungskraft der Wärmeübertragungsrohre (13) an der Rohrplatte (12) durch Bilden von durchgehenden Nuten (60) in einer Erstreckungsrichtung des Wärmeübertragungsrohrs (13) an einer inneren Umfangsfläche (13p) des Wärmeübertragungsrohrs (13) innerhalb des Durchgangslochs (18) in einer radialen Richtung (Dr), und Reduzieren einer Stärke des Wärmeübertragungsrohrs (13) in der radialen Richtung (Dr) an einem Teil des Wärmeübertragungsrohrs (13) in einer Umfangsrichtung (Dc) reduziert wird.

5. Verfahren (S1D) zum Zerlegen eines Dampferzeugers (10) nach einem der Ansprüche 1 bis 4, ferner umfassend:
einen Schritt eines Durchführens einer Kernbohrbearbeitung mit einem Durchmesser (D2) gleich wie oder größer als ein Außendurchmesser (D1) des Wärmeübertragungsrohrs (13) nach dem Schritt (S2D) eines Reduzierens der Befestigungskraft der Wärmeübertragungsrohre (13).

## Revendications

1. Procédé (S1A-S1D) pour démonter un générateur de vapeur (10) incluant une plaque à tubes (12) ayant une pluralité de trous traversants (18), une pluralité de tubes de transfert de chaleur (13) insérés chacun dans les trous traversants (18), et fixés aux surfaces de paroi interne (18i) des trous traversants, une pluralité de bouchons (30) insérés dans chacun de la pluralité de tubes de transfert de chaleur (13), et des parties soudées (20) fixant entre elles des parties d'extrémité (13b) des tubes de transfert de chaleur (13) et la plaque à tubes (12), le procédé comprenant :
une étape (S2A-S2D) de réduction d'une force de fixation des tubes de transfert de chaleur (13) à la plaque à tubes (12) de laquelle les parties soudées (20) sont retirées ; et
une étape (S3, S3D) de retrait des tubes de transfert de chaleur (13) d'un intérieur des trous traversants (18),
**caractérisé en ce que**
dans un cas où les parties d'extrémité (13b) du tube de transfert de chaleur (13) sont scellées par la pluralité de bouchons (30) insérés dans les tubes de transfert de chaleur (13), les parties soudées (20) sont retirées, y compris les bouchons (30).

2. Procédé (S1A) pour démonter un générateur de vapeur (10) selon la revendication 1, dans lequel
dans l'étape (S2A) de réduction de la force de fixation des tubes de transfert de chaleur (13), la force de fixation des tubes de transfert de chaleur (13) à la plaque à tubes (12) est réduite en chauffant les tubes de transfert de chaleur (13) pour déformer les tubes de transfert de chaleur (13).

3. Procédé (S1B) pour démonter un générateur de vapeur (10) selon la revendication 1, dans lequel
dans l'étape (S2B) de réduction de la force de fixation des tubes de transfert de chaleur (13), la force de fixation des tubes de transfert de chaleur (13) à la plaque à tubes (12) est réduite en découpant une surface périphérique interne (13p) du tube de transfert de chaleur (13) à l'intérieur du trou traversant (18) dans une direction radiale (Dr) et en réduisant une épaisseur du tube de transfert de chaleur (13) dans la direction radiale (Dr).

4. Procédé (S1C) pour démonter un générateur de vapeur (10) selon la revendication 1, dans lequel
dans l'étape (S2C) de réduction de la force de fixation des tubes de transfert de chaleur (13), la force de fixation des tubes de transfert de chaleur (13) à la plaque à tubes (12) est réduite en formant des rainures continues (60) dans une direction d'extension du tube de transfert de chaleur (13) sur une surface périphérique interne (13p) du tube de transfert de chaleur (13) à l'intérieur du trou traversant (18) dans une direction radiale (Dr), et en réduisant une épaisseur du tube de transfert de chaleur (13) dans la direction radiale (Dr) au niveau d'une partie du tube de transfert de chaleur (13) dans une direction circonférentielle (Dc).

5. Procédé (S1D) pour démonter un générateur de vapeur (10) selon l'une quelconque des revendications 1 à 4, comprenant en outre :
une étape de réalisation d'un traitement de trépanage avec un diamètre (D2) égal ou supérieur à un diamètre externe (D1) du tube de transfert de chaleur (13) après l'étape (S2D) de réduction de la force de fixation des tubes de transfert de chaleur (13).
